# EUROPÄISCHE PATENTANMELDUNG

(11) **EP 1 011 069 A2**
(43) Veröffentlichungstag der Anmeldung: **21.06.2000**
(21) Anmeldenummer: 99124505.1
(22) Anmeldetag: 09.12.1999
(51) Int. Cl.: G06K 19/04

(54) **Vorrichtung für die Aufnahme elektronischer Datenträger für Druckgasflaschen**

(30) Priorität: 15.12.1998 DE 19857717
(71) Anmelder: MESSER GRIESHEIM GMBH, 60547 Frankfurt (DE)
(72) Erfinder: Markhoff, Klaus, 47906 Kempen (DE)

(57) **Zusammenfassung**

Die Vorrichtung (1) mit elektronischem Datenträger zur Identifikation und Kennzeichnung von Druckgasflaschen enthält einen Haltering (3) und innerhalb des Halteringes (3) ist der elektronische Datenträger mit einer ringförmigen Antenne angeordnet, wobei der Haltering (3) den Halsring (2) der Druckgasflasche aufnimmt. Vorrichtung (1) und Halsring (2) bilden eine Einheit und werden mit der Druckgasflasche unlösbar verbunden.

## Beschreibung

Die Erfindung betrifft eine Vorrichtung für die Aufnahme elektronischer Datenträger für Druckgasflaschen zur Flaschenidentifizierung.

Eine Vorrichtung für die Aufnahme elektronischer Datenträger für Druckgasflaschen wird in DE 44 09 313 A1 (MG 1901) beschrieben. Zur Aufnahme eines Transponders dient eine Lasche an einem Kunststoffring, der unterhalb des Druckgasflaschenkappengewindes angeordnet wird.

Ein Chipträger aus Kunststoff wird in EP 0 772 152 (MG 1968) beschrieben. Der Chipträger besitzt Münzform und befindet sich außerhalb eines Kunststoffbefestigungsringes.

Bei den bekannten Vorrichtungen ist der Transponder-Chip an exponierter Stelle, daher besteht die Gefahr der Beschädigung bei dem Transport der Druckgasflaschen. Die Datenübertragung von dem Transponder-Chip an der Druckgasflasche kann bisher nur in unmittelbarer Nähe zum Transponder-Chip an einer Stelle an der Druckgasflasche erfolgen. Das Lesegerät muß daher zur Datenübernahme sehr genau an einem Punkt positioniert werden.

Das Problem besteht somit darin, den verletzlichen Chip so an der Druckgasflasche zu befestigen, daß a) die Sendeleistung durch die Nähe zum Metall der Druckgasflasche oder ihrer metallischen Ausrüstungsteile, wie Halsring, Ventil, Schutzkorb oder dergleichen nicht reduziert wird, b) die filigrane Ausführung des Chips nicht verletzt oder zerstört wird (z. B. durch Vibrationen oder Stöße bei dem relativ rauhen Umgang mit den Druckgasflaschen) und c) der Chip "unsichtbar" an der Druckgasflasche befestigt wird, um unkonrtollierte Manipulationen durch unbefugte Personen zu verhindern.

Die Aufgabe der Erfindung besteht in der Schaffung einer Vorrichtung, die die genannten Nachteile vermeidet.

Gelöst wurde die Aufgabe durch eine Vorrichtung mit den Merkmalen von Anspruch 1.

Die Vorrichtung enthält einen Haltering, einen elektronischen Datenträger und eine Ringantenne. Die Vorrichtung wird mit dem Flaschenhalsring unlösbar an der Druckgasflasche befestigt. Druckgasflaschen sind beispielsweise aus Stahl, Aluminium oder Composite-Werkstoffen.

Der Haltering zur Aufnahme von einem elektronischem Datenträger und einer Ringantenne wird im allgemeinen aus einem formbaren, elektromagnetische Wellen nicht abschirmenden Material wie Kunststoff hergestellt. Vorzugsweise dienen thermoplastische Kunststoffe wie Polyamid, Polyolefin (z. B. Polyethylen, Polypropylen, PVC), Polyester (PET, PBT, LCP), Polysterol oder Polyacetal (z. B. Polyoxymethylen) zur Herstellung.

Der Haltering wird vorzugsweise aus einem Teil gebildet.

Der Haltering kann je nach Anforderungen und Gegebenheiten modifiziert und an die verschiedenen Druckgasflaschentypen angepaßt werden. Bei einem Außendurchmesser von weniger als 140 mm (z. B. 125 mm) ist die Vorrichtung geeignet für 10 Liter-Druckgasflaschen (geometrisches Volumen von 10 Litern). Der Innendurchmesser des Halteringes ist im oberen Bereich so bemessen, daß in die innere Öffnung der übliche Flaschenhalsring paßt. Im unteren Bereich weist der Haltering einen nach innen gerichteten, vorzugsweise umlaufenden Kragen auf. Auf diesem Kragen sitzt der Halsring auf.

Die Ringantenne ist z. B. eine Drahtspule ohne oder mit einem ringförmigen Träger. Der ringförmige Träger ist z. B. eine Spule oder ein anderes ringförmiges Kunststoffprofil. Der Träger besteht wie der Haltering vorzugsweise aus einem thermoplastischen Kunststoff. Der ringförmige Träger kann auch Teil des Halteringes sein. Die Antenne, das heißt der Antennendraht, wird vorzugsweise am Träger angebracht, z. B. durch Aufwickeln oder Einlegen in einen ringförmigen Hohlraum, der in der Regel an einer Seite, z. B. Oberseite oder Außenseite, offen ist. Nach Anbringen der Antenne am Träger wird die Antenne vorzugsweise durch Ausfüllen des Hohlraumes mit einer Gießmasse (z. B. aushärtende Gießmasse für Elektronikteile) fixiert. Die Ringantenne, das heißt Träger mit Antenne, hat zum Beispiel einen Außendurchmesser von 120 mm, einen Innendurchmesser von 110 mm und eine Dicke von 5mm, ausgelegt für einen Haltering für 10 Liter-Druckgasflaschen. Die Ringantenne wird vorzugsweise im Haltering so angeordnet, daß die Ringantenne zum Metallkörper der Flaschenhalsringes einen Mindestabstand von 5 mm, vorzugsweise 5 bis 10 mm, aufweist. Durch den Mindestabstand werden Störeffekte bei der Datenübertragung durch den Metallkörper vermieden und eine einwandfreie Datenübertragung gewährleistet.

Als elektronischer Datenträger dient vorzugsweise ein Datenträger-Chip oder Transponder-Chip, der in der besonders bevorzugten Ausführung lesbar und mehrmals beschreibbar ist. In der Regel werden über Radiowellen die im Chip gespeicherten Daten an ein mobiles Erfassungsgerät (Lesegerät) gesendet, dort angezeigt, zwischengespeichert und anschließend an eine zentrale Recheneinheit mit z. B. einer Datenbank übertragen. Mit den Daten wird z. B. ein detaillierter Lieferschein, der Flaschennummern, Produktnummern, Produktbezeichnungen und Flaschenvolumen aufführt, automatisch erstellt. Der Kunde kann das System zur Optimierung der Lagerwirtschaft nutzen. Eine Software bietet im Lagerbetrieb eine Vielzahl von Auswertungsmöglichkeiten, unter anderem Bestands-, Bewegung-, Standzeiten-, Mietkontroll- und TÜV-Terminlisten. Bei Bedarf stehen weitere Auswertungskriterien zur Verfügung. Der Transponder-Chip ist mit der Ringantenne verbunden. Transponder-Chip und Ringantenne werden in dem Haltering untergebracht. Ein vorzugsweise eingesetzter Transponder-Chip ist ein Plättchen mit einer Fläche von 5x5 mm oder kleiner.

Die Vorrichtung mit Haltering und integriertem Transponder-Chip mit Ringantenne ist sehr vorteilhaft bei der Kennzeichnung oder Identifikation von Druckgasflaschen. Die in der Regel unlösbar an der Druckgasflasche angebrachte Vorrichtung bietet dem Transponder-Chip großen Schutz und durch die Ringantenne ist der Transponder-Chip von allen Seiten les- und beschreibbar, was bisher nicht möglich war. Durch die richtungsunabhängige Datenübernahme oder Datenübertragung lassen sich automatische Les-/Schreibprozesse z.B. im Füllprozeß von Druckgasflaschen einfacher durchführen.

Die Vorrichtung enthält einen Halsring, der sich in seiner Form den standardmäßig eingesetzten Stahlhalsringen bei Druckgasflaschen in seiner Form so anpaßt, daß ein neuer Halsring in kombinierter Kunststoff-Metallausführung entsteht.

In den Halsring ist an der Innenseite eine Nut eingedreht, die den Chip mit der Ringantenne aufnimmt. Vorzugsweise wird nach Montage von Ringantenne und Chip ein Kunststoff-Distanzring in die Nut gelegt, so daß ein Abstand der Ringantenne von mindestens 5 mm, vorzugsweise von ca. 10 mm, vom metallischen Halsring gewährleistet ist. Die Lage der Nut ist außerdem vorzugsweise so gewählt, daß auch eine Distanz zum Metall der Druckgasflasche von mind. 20 mm gegeben ist.

Durch diese Anordnung ist eine Distanz (Isolierung) von mindestens 5 mm zu metallischen Bestandteilen der Druckgasflasche erfüllt. Die Sendeleistung des Transponder-Chip wird daher durch metallische Teile nicht beeinträchtigt.

Zur Montage an die Druckgasflasche wird der Kunststoff-Halsrings zuerst mit dem metallischen Halsring zusammengesetzt und danach der kombinierte Halsring über eine Preßpassung kraftschlüssig mit der Druckgasflaschen verbunden bzw. aufgedrückt. Der elektronische Chip kann danach nicht mehr von Unbefugten entfernt werden, wie es in der Praxis bisher vorgekommen ist. Der Chip mußte dann mit relativ hohem Kostenaufwand und unnötig hoher Stückzahl ersetzt werden.

Der Chip ist "unsichtbar" mit der Druckgasflasche verbunden. Unbefugte Eingriffe sind ausgeschlossen. Der Chip ist in der Nut so sicher eingebaut, daß auch keine Beeinträchtigungen seiner Leistung bei dem Transport oder Betrieb der Druckgasflasche zu befürchten ist.

Mit kleinen Modifikationen ist die Vorrichtung an jede Druckgasflaschenform für verdichtete, unter Druck verflüssigte oder gelöste Gase anpaßbar.

Die Erfindung wird anhand der Zeichnung erläutert.
Fig. 1 zeigt ein Schema einer Vorrichtung zur Aufnahme eines elektronischen Chips und einer Ringantenne im Querschnitt.
Fig. 2 zeigt ein Schema einer alternativen Vorrichtung zur Aufnahme eines elektronischen Chips und einer Ringantenne im Querschnitt, wobei die Nut zur Aufnahme der Ringantennne nach unten geöffnet ist.
Fig. 3 zeigt eine Detailansicht einer Vorrichtung zur Aufnahme eines elektronischen Chips und einer Ringantenne wie in Fig. 2, wobei die Ringantenne durch eine Einrast- oder Haltelippe in der Nut fixiert wird.

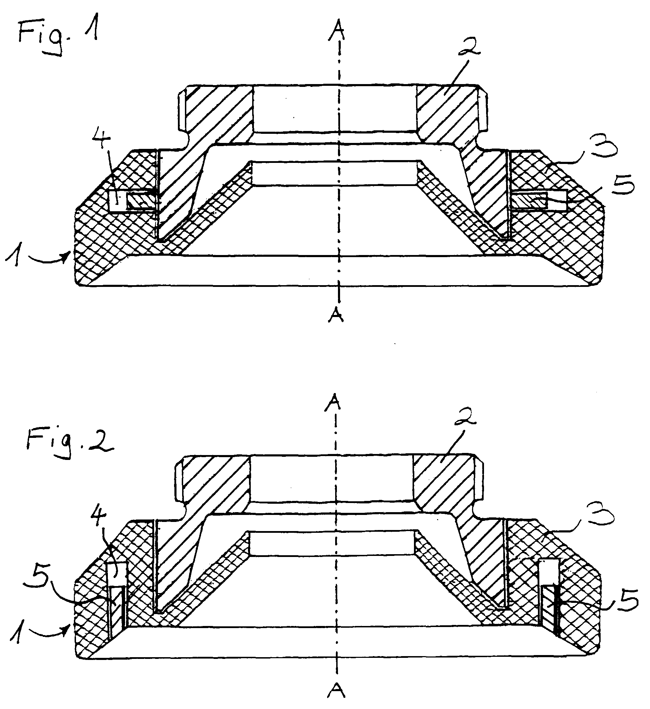

Die Vorrichtung 1 in Fig. 1 enthält einen Haltering 3 aus Kunststoff, der in einer umlaufenden inneren Nut einen Raum 4 für die Ringantenne 6 und den Transponder-Chip aufweist. In diese innere Nut (mit Öffnung nach innen; horizontale Nut) wird ein Distanzring 5 aus Kunststoff eingelegt. Der Distanzring 5 zwischen Halsring 2 (in der Regel aus Stahl) und Ringantenne 6 in Raum 4 gewährleistet einen permanenten Abstand von Chip und Ringantenne von den metalischen Teilen (Halsring, Druckgasflasche). Halsring 2 (z. B. aus Stahl) und Haltering 3 aus Kunststoff, bestückt mit Ringantenne und Transponder-Chip, werden vor der endgültigen Anbringung des Halsringes 2 an der Druckgasflasche zusammengesteckt. Diese Kombination mit Haltering 3 und Halsring 2 wird auf den Ventilstutzen einer Druckgasflasche aufgepreßt. Damit ist der Haltering 3 dauerhaft fixiert und kann ohne Beschädigung nicht mehr gelöst werden. Der Halsring 2 hat z. B. einen größten äußeren Durchmesser von 90 mm und eine Gesamthöhe von 40 mm. Der Haltering 3 hat eine innere Öffnung, die den Halsring 2 aufnimmt. Halsring 2 und Haltering 3 haben eine zentrale Öffnung mit einem Durchmesser z. B. von mindestens 42 mm zur Aufnahme des Ventilstutzens der Druckgasflasche. Der Haltering 3 hat einen inneren Kragen, auf dem der Fuß des Halsringes 2 aufsitzt. Die Maße des Kragens sind unkritisch und können varriiert werden.

Fig. 2 zeigt ein Beispiel einer alternativen Vorrichtung mit einer umlaufenden inneren Nut zur Aufnahme von Ringantenne 6 mit Transponder-Chip und Distanzring 5, wobei die Nut nach unten geöffnet ist (vertikale Nut).

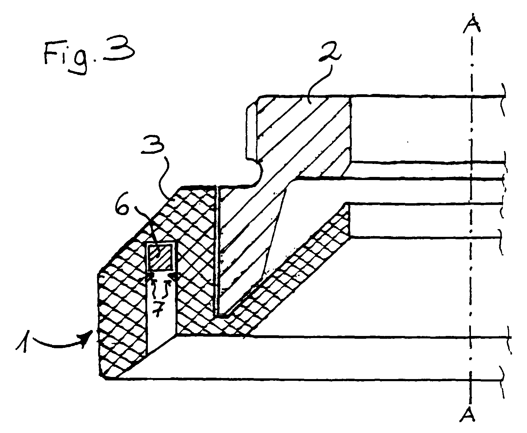

Fig. 3 zeigt ein weiteres Ausführungsbeispiel einer Vorrichtung (Detailansicht). Die Vorrichtung weist wie in Fig. 2 eine vertikale Nut auf, die zusätzlich an den inneren Seiten der Nut jeweils eine Einrast- oder Haltelippe 7 zur Fixierung der Ringantenne 6 enthält. Die Einrast- oder Haltelippen 7 machen den Distanzring 5 überflüssig.

### Bezugszeichenliste

- 1: Vorrichtung mit Haltering, Ringantenne und elektronischem Datenträger
- 2: Halsring einer Druckgasflasche
- 3: Haltering
- 4: Raum zur Aufnahme der Ringantenne und elektronischem Datenträger
- 5: Distanzring
- 6: Ringantenne
- 7: Einrast- oder Haltelippe

## Patentansprüche

1. Vorrichtung (1) mit elektronischem Datenträger zur Identifikation und Kennzeichnung von Druckgasflaschen, dadurch gekennzeichnet, daß die Vorrichtung (1) einen Haltering (3) enthält und innerhalb des Halteringes (3) der elektronische Datenträger mit einer ringförmigen Antenne angeordnet ist und der Haltering (3) den Halsring (2) der Druckgasflasche aufnimmt.

2. Vorrichtung (1) nach Anspruch 1, dadurch gekennzeichnet, daß der Haltering (3) aus einem Teil besteht.

3. Vorrichtung (1) nach Anspruch 1, dadurch gekennzeichnet, daß der Haltering (3) aus Kunststoff besteht.

4. Vorrichtung (1) nach einem der Ansprüche 1 bis 3, dadurch gekennzeichnet, daß ein Transponder-Chip als elektronischer Datenträger dient.

5. Vorrichtung (1) nach einem der Ansprüche 1 bis 4, dadurch gekennzeichnet, daß der Haltering (3) unlösbar mit der Druckgasflasche verbunden ist.

6. Vorrichtung (1) nach einem der Ansprüche 1 bis 5, dadurch gekennzeichnet, daß die Vorrichtung (1) einen Distanzring (5) enthält.

7. Vorrichtung (1) nach einem der Ansprüche 1 bis 6, dadurch gekennzeichnet, daß die Vorrichtung (1) außerhalb des Halteringes (3) keine nach außen überstehenden Teile aufweist.

8. Vorrichtung (1) nach einem der Ansprüche 1 bis 7, dadurch gekennzeichnet, daß der Haltering (3) weitgehend symmetrisch aufgebaut ist.

9. Druckgasflasche (5) mit einer Vorrichtung (1) nach einem der Ansprüche 1 bis 8.
